# EUROPEAN PATENT APPLICATION

(11) **EP 2 043 214 A2**
(43) Date of publication of application: **01.04.2009**
(21) Application number: 08253025.4
(22) Date of filing: 13.09.2008
(51) Int. Cl.: H02G 3/08

(54) **A cradle arrangement**

(30) Priority: 14.09.2007 GB 0717938
(71) Applicant: Kovacs, Laurence, Halesowen West Midlands B63 2YD (GB)
(72) Inventor: Kovacs, Laurence, Halesowen West Midlands B63 2YD (GB)
(74) Representative: Parnham, Kevin

(57) **Abstract**

A cradle arrangement for an electrical back box, the arrangement comprising a back surface with legs extending to one side of the back surface, the back surface defined by an intumescent material layer and the legs configured in use to retain the intumescent material layer adjacent to an electrical back box.

## Description

The present invention relates to cradle arrangements and more particularly cradle arrangements utilised for presenting intumescent material.

Inhibition of fire, and in particular spread of fire, is an important requirement with regard to protecting a building. As it will be understood there are a large number of potential ignition points of fires. Some of these initial points relate to electrical junction boxes such as those used in relation to sockets, switches and electrical cable connection boxes. It will be understood that these junction boxes typically incorporate a back box within which the terminals or electrical cables are connected. Excessive heat or sparking can create conditions suitable for initiating and continuing a fire. The electrical cable may provide a fuel for continuation of the fire. Unfortunately, back boxes by their nature are relatively open and therefore air can reach the fire to continue that fire.

It is known to use intumescent materials which swell and expand excessively when subject to elevated temperatures in order to block and fill voids and openings and therefore prevent access by oxygen to continue propagation of a fire and the fire will be extinguished. In terms of presenting intumescent materials it will be understood that these materials generally take the form of a powder and therefore they must be appropriately presented to be active in use. Furthermore, the intumescent material must be positioned such that the overall function of the electrical junction box can continue. It would also be advantageous to be able to provide intumescent material within existing electrical junction box populations to improve fire safety.

In accordance with aspects of the present invention there is provided a cradle arrangement for an electrical back box, the arrangement comprising a back surface with legs extending to one side of the back surface, the back surface defined by an intumescent material layer and the legs configured in use to retain the intumescent material layer adjacent to an electrical back box.

Also in accordance with aspects of the present invention there is provided an electrical back box arrangement comprising an electrical back box and a cradle arrangement comprising a back surface having an intumescent material layer and legs to extend about the back box to retain the intumescent material layer adjacently to the back box.

Typically, the back surface has an aperture. Generally, the back surface comprises a plate. Possibly, the plate is smaller than the intumescent material layer. Normally, the back box is embraced by the cradle.

Generally, the legs have a bias to grip against the back box.

Possibly, the legs have feet to grip against a shoulder portion about an aperture.

Typically, the legs have a constriction to retain the intumescent material layer. Possibly, the constriction comprises dimples and/or detents.

Possibly, the arrangement incorporates legs to inhibit movement of the intumescent material in the arrangement.

Possibly, the arrangement incorporates a retainer channel or rail to grip an edge of the intumescent layer.

Possibly, the arrangement is arranged to engage inside the back box. Alternatively, the arrangement is normally arranged to engage an outside of the back box.

Possibly, the legs are deformable over an edge of the back box and/or an edge of an aperture to retain the back box in use.

Possibly, the back box is formed from a plastics material or metal. Generally, the back box is for a socket or switch or an electrical cable junction.

Typically, the intumescent material layer comprises a consolidation or felt with intumescent particles accommodated within the consolidation or felt.

Embodiments of aspects to the present invention will now be described by way of example and reference to the accompanying drawings in which: -
Figure 1 is a schematic side view of a cradle arrangement and back box in accordance with aspects of the present invention located within an aperture as part of an electrical junction box;
Figure 2 is a schematic side view of part of a cradle in accordance with aspects of the present invention illustrating configuration retention of an intumescent material layer;
Figure 3 is a schematic side view of part of a cradle illustrating an alternative retention of an intumescent material layer;
Figure 4 is a schematic plan view of a cradle in accordance with a further embodiment of aspects of the present invention; and,
Figure 5 is a bottom view of a cradle in accordance with an additional embodiment of aspects of the present invention.

In order to propagate and spread a fire requires access to oxygen, that is to say air. In such circumstances if oxygen can be denied to fire the fire will be either contained or extinguished. Intumescent materials are utilised in order to block apertures and so inhibit air flow which may feed fire propagation. With regard to electrical junction boxes and in particular junction boxes used for sockets and/or light switches and/or cable junctions convenient use of intumescent materials can be denied by the natural temperature of such junction boxes and a requirement to appropriately present the intumescent material reliably and consistently.

Junction boxes generally comprise a back box which is located within an aperture in a wall surface or are surface mounted. For convenience and aesthetic reasons back boxes are made from plastics materials although metal junction boxes are also utilised particularly with respect to recessed aperture installations.

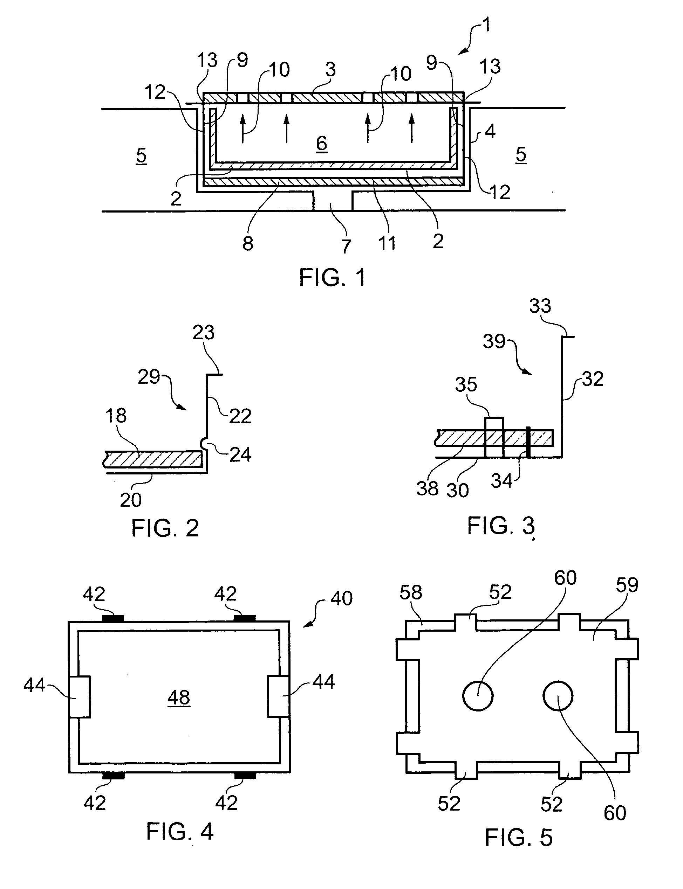

Figure 1 provides a schematic illustration of a junction box 1 comprising a back box 2 and a cover plate 3. The junction box 1 is located within an aperture 4 formed in a wall surface 5. Within the junction box 1 a void 6 will typically incorporate electrical terminals or otherwise to allow a socket or an electrical switch or connection of cables to be provided. In any event, it will be appreciated, the void 6 receives ends of electrical cables (not shown) through an aperture 7 or alternatively through channelling or conduits in the wall 5 or behind that wall in the cavity or on the surface of the wall 5 in chased plaster or surface capping. In the above circumstances it will be understood that an electrical fire may initiate in the void 6 or in the cable but in any event to continue that electrical fire must have access to air. Junction boxes and in particular sockets, incorporate apertures to allow the pins of a plug to enter and in any event are not airtight. In such circumstances should a fire initiate air may be drawn through the junction box 1 and in particular the back box 2. Aspects of the present invention relate to presentation of an intumescent layer 8 which will expand as a result of the high temperatures of combustion to effectively close the junction box 1 and therefore prevent air ingress. Normally, the junction box 1 will be crushed by the action of the intumescent material 8.

In accordance with aspects of the present invention the intumescent layer 8 acts as a base surface for a cradle 9 located about a back box 2. Although illustrated as located about the back box 2 it will also be understood that by appropriate sizing and configuration the cradle 9 may also be located internally within the back box 2. However, and in any event, whether internally located or externally located the cradle 9 will be adjacent to the back box 2 and typically as indicated will form part of a base surface to rapidly expand appropriately in the direction of arrowheads 10 to rapidly block the apertures 4 and so prevent ingress of air. It will be appreciated that due to the nature of intumescent materials the expansion will be massive and typically the cover plate 3 will be forced by the expansion of the intumescent layer 8 and the holes of the aperture 4 and the opening 7 closed.

In order to achieve appropriate presentation of the intumescent material layer 8 for rapid deployment whilst avoiding interference with normal operation within the junction box 1 it is important that the intumescent material 8 is retained along a back surface of a junction box 2. However, in some circumstances at least a part of the intumescent material may expand to side parts of the cradle 9. By locating the intumescent material 8 as a layer preferably on the other side of the back box 2 terminals and other electrical equipment can still be relatively easily accommodated within the void 6 of the junction box 1. The cradle 9 will simply be hooked over an aperture 4, cut in the wall to accommodate the base. The intumescent layer 8 may be in the cradle when located in the aperture 4, or loaded when the cradle is in place, then the box 2 placed in the cradle.

The cradle 9 in accordance with aspects of the present invention typically comprises a back surface 11 with upstanding legs 12. These legs 12 allow the cradle to nestle about the back box 2. The legs 12 incorporate feet 13 which hook over an edge of the aperture 4 and the back box 2 to retain position and presentation of the cradle 9 with the intumescent material layer 8 appropriately positioned. The cradle 9 may be specified for a particular size of back box 2 or the legs 12 defined such that they can be deformed and bent over the edges of the aperture 4 as required. Normally, as indicated, the cradle 9 resides externally of the back box 2 within the aperture 4 so it will be understood that the legs 12 may hook over an edge of the back box 2 or an edge of the aperture 4. In either event, the cradle 9 is resiliently presented and robust location is ensured through anchoring to the back box with internal location or sandwiching between the back box and the aperture 4 in external location. The back box itself will be generally robustly secured through screws or bolts within the wall 4. The feet 13 may be sandwiched between the back box edge and a lid or face plate forming an electrical junction box.

It will be understood that it is important that the intumescent material layer is robustly associated with the cradle in accordance with aspects of the present invention. If the intumescent layer was loosely associated with a cradle it may move and even fall out of position and therefore be less efficient in use. In such circumstances as depicted in figure 2, the intumescent layer 18 generally abuts against a bottom plate or grid 20 of a cradle 29. The cradle 29 has upstanding legs 22 with a foot 23 to engage in use a back box or aperture as described above with regard to figure 1. In order to retain the intumescent layer 18 a dimple or rib 24 is provided which extends inwardly of the cradle 29. Generally, legs 22 on either side of the cradle 29 will act through dimples 24 to retain the intumescent material layer 18 in position. This position as can be seen is substantially flat against the plate 20 of the cradle 29. The number of dimples 24 provided will depend upon a necessity for retention upon the cradle 29. It will be appreciated that the dimples 24 effectively provide a constriction within the cradle 29 to retain position of the layer 18. Alternatives to dimples 24 may include providing folds or inward projection of the legs 22. The folds may comprise a fold or crimp between the legs on the base of the cradle.

It will be understood that the legs 22 as depicted in figures 1 and 2 extend substantially to the side of a back surface or plate 20. The legs 22 extend substantially perpendicularly although the angle of presentation of the legs to the back surface will depend upon the shape of the back box or aperture in which they are to reside. In some circumstances and if the cradle is made from a sprung material a slight angular presentation may create constriction and/or retention bias for association with the back box or aperture which may be beneficial for securing location. In any event, the legs 29 extend laterally or to the side of the base surface to present the intumescent material layer.

Figure 3 illustrates a further alternative for presentation of an intumescent material layer 30. In some circumstances provision of folds or dimples 24 as depicted in figure 2 may be unacceptable in the material in which a cradle is formed. In such circumstances as depicted in figure 3 the intumescent material layer 30 is located adjacent and substantially flat against a back plate 30. As previously legs 32 extend laterally and to the side of the back plate 30 such that the cradle 39 can envelope or sit about a back box in accordance with aspects of the present invention. Feet 33 again are utilised to retain position of the cradle 39 about the back box. With respect to figure 3 the intumescent material layer 30 is not constrained by a restriction but is located by alternative means through use of an adhesive or possibly mechanical fixing such a rivets or stitching 34. In such circumstances the intumescent material layer is again retained and appropriately presented.

It will be understood that use of constrictions such as dimples 24 (figure 2) or adhesives or mechanical fastenings such as pins or rivets may be utilised in associated with simple upstanding pegs 35 which will act in cooperation to prevent sideways and other movements of the intumescent material layer.

Generally the cradle in accordance with aspects of the present invention will be made from sheet material appropriately cut, shaped and formed to provide the base plate as well as legs extending sideways from the plate in order to define a cradle within which intumescent material layer can be presented. The intumescent material layer is generally formed from a sheet of flat material appropriately compressed or formed with a felt or otherwise into a consolidation with intumescent particles within it. The intumescent layer can be cut and in such circumstances apertures may be cut into the intumescent material to allow cable to pass through it. In such circumstances as indicated above cable to terminals etc within the void 6 as depicted in figure 1 can pass through an aperture 7 or through the side of the back box 2.

Figure 4 provides a schematic plan view of a cradle 40 with a layer of intumescent material 58 located with legs 42 extending upwardly and therefore substantially perpendicular to the plane of the layer of intumescent material. The layer of intumescent material in figure 4 is retained by channels or rails 44 which extend inwardly over an edge of the intumescent material layer 48. In such circumstances the layer 48 is robustly held and a back box can be located between the legs 42 as described above.

Figure 5 provides a bottom view of a cradle 59 with a layer of intumescent material 48 secured between legs 52. As previously the legs 52 include feet to engage about a back box or aperture to locate a junction box in accordance with aspects of the present invention. As will be seen the cradle 59 comprises a base plate with in which apertures 60 are provided. This aperture 60 will allow cable to pass through the cradle 59 or simply act to ensure that the cradle does not shield the intumescent material from heat and therefore inhibit or delay deployment of the intumescent material in use. It will be understood again by presentation of the intumescent material upon a plate or as described above generally expansion is provided to block, crush and close the junction box rapidly should heat activating the intumescent material.

Typically, the back box as indicated above can be formed from a plastics material. In such circumstances by use of a layer of intumescent material in accordance with aspects of the present invention potential problems with the plastics material melting are avoided by the blocking effects of the intumescent material expanded as a result of heat.

Cradles in accordance with aspects of the present invention will typically be formed from metal with relatively small diameter or width legs such that the overall weight and in particular heat capacity is not increased such that the intumescent material will rapidly heat and expand in order to act in accordance with blocking for fire retardation in accordance with aspects of the present invention.

Typically, cradles in accordance with aspects of the present invention will be specified for particular sizes of junction box in particular back boxes in terms of length of legs and positioning of feet etc. However, if the legs can be rendered appropriately malleable these legs can be extended over the edge to achieve location and then excess material trimmed as required. Alternatively, the excess material may allow further anchoring of the cradle about an aperture or in a wall or otherwise for location of the intumescent material within the back box.

Modification and alterations to aspects of the present invention will be appreciated by those skilled in the art. Thus, for example the cradle as indicated above may be arranged to have slight angular presentation rather than perpendicular presentation of the legs to give a degree of spring bias for location and retention of the cradle within a back box or aperture.

Whilst endeavoring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A cradle arrangement for an electrical back box, the arrangement comprising a back surface with legs extending to one side of the back surface, the back surface defined by an intumescent material layer and the legs configures in use to retain the intumescent material layer adjacent to an electrical back box.

2. An electrical back box arrangement comprising an electrical back box and a cradle arrangement comprising a back surface having an intumescent material layer and legs to extend about the back box to retain the intumescent material layer adjacently to the back box.

3. An arrangement as claimed in claim 1 or claim 2 wherein the plate is smaller than the intumescent material layer.

4. An arrangement as claimed in any of claims 1 to 3 wherein the back box is embraced by the cradle.

5. An arrangement as claimed in any preceding claim wherein the legs have a bias to grip against the back box.

6. An arrangement as claimed in any preceding claim wherein the legs have feet to grip against a shoulder portion about an aperture.

7. An arrangement as claimed in any preceding claim wherein the legs have a constriction to retain the intumescent material layer.

8. An arrangement as claimed in claim 7 wherein the constriction comprises dimples and/or detents.

9. An arrangement as claimed in any preceding claim wherein the arrangement incorporates legs to inhibit movement of the intumescent material in the arrangement.

10. An arrangement as claimed in any preceding claim wherein the arrangement incorporates a retainer channel or rail to grip an edge of the intumescent layer.

11. An arrangement as claimed in any preceding claim wherein the arrangement is arranged to engage inside the back box.

12. An arrangement as claimed in any of claims 1 to 10 wherein the arrangement is normally arranged to engage an outside of the back box.

13. An arrangement as claimed in any preceding claim wherein the legs are deformable over an edge of the back box and/or an edge of an aperture to retain the back box in use.

14. An arrangement as claimed in any preceding claim wherein the back box is for a socket or switch or an electrical cable junction.

15. An arrangement as claimed in any preceding claim wherein the intumescent material layer comprises a consolidation or felt with intumescent particles accommodated within the consolidation or felt.
